# EUROPÄISCHE PATENTSCHRIFT

(11) **EP 1 882 719 B1**
(45) Veröffentlichungstag und Bekanntmachung des Hinweises auf die Patenterteilung: **19.04.2017**
(21) Anmeldenummer: 06014372.4
(22) Anmeldetag: 11.07.2006
(51) Int. Cl.: C08L 77/00, C08K 7/14, C08K 7/02, C08K 3/00

(54) **Polyamidformmasse und deren Verwendung**
Polyamide moulding composition and use thereof
Composition à mouler en polyamide et son utilisation

(43) Veröffentlichungstag der Anmeldung: 30.01.2008
(73) Patentinhaber: EMS-CHEMIE AG, 7013 Domat-Ems (CH)
(72) Erfinder: Thullen, Helmut, 7402 Bonaduz (CH); Rytka, Christian, 7402 Bonaduz (CH); Bühler, Friedrich Severin, 7430 Thusis (CH); Hala, Ralf, 88161 Lindenberg (DE)
(74) Vertreter: Pfenning, Meinig & Partner mbB

(56) Entgegenhaltungen:
- EP-A1- 0 337 443
- WO-A-2005/104985
- US-A1- 2004 102 559
- SOLVAY ADVANCED POLYMERS L.L.C.: "Product data IXEF 2030"[Online] 2005, XP002411369 Gefunden im Internet: URL:http://www.solvayadvancedpolymers.com/ static/wma/pdf/8/4/0/6/IXEF%202030.pdf> [gefunden am 2006-12-12]

## Beschreibung

Die vorliegende Erfindung betrifft Polyamidformmassen, die bei guten mechanischen Eigenschaften einen sehr geringen Verzug aufweisen. Erreicht wird dies durch eine Kombination von transparentem Polyamid mit faserförmigen Verstärkungsstoffen sowie partikulären Füllstoffen. Verwendung finden die erfindungsgemäßen Formmassen für die Herstellung beliebiger Formkörper, Halbzeuge bzw. Fertigteile.

Polyamide sind heutzutage weit verbreitet als Strukturelemente für den Innen- und Außenbereich, was im Wesentlichen auf die hervorragenden mechanischen Eigenschaften zurückzuführen ist.

Eine Verbesserung der mechanischen Eigenschaften, wie Festigkeit und Steifheit, lässt sich insbesondere durch den Zusatz faserförmiger Verstärkungsstoffe, z.B. Glasfasern, erreichen. Mit dem Zusatz von faserförmigen Verstärkungsstoffen ist aber häufig ein erhöhter Verzug der Formteile verbunden. Dies hat zur Konsequenz, dass nur geringe Gehalte an faserförmigen Verstärkungsstoffen, besser noch nur isotrope Füllstoffe, wie Glaskugeln, eingesetzt werden können, wenn der Verzug als kritischer Parameter für das Formteil angesehen wird. Die so erhaltenen Formmassen weisen dann im Formteil nur einen niedrigen Zug-E-Modul auf.

Einerseits bewirkt der Zusatz von partikulären Füllstoffen eine Reduzierung des Verzugs, führt aber andererseits zu einer Verschlechterung hinsichtlich der mechanischen Eigenschaften, wie Zähigkeit und Reißdehnung.

Aus der WO 2005/104985 A1 ist eine portodontische Klammer bekannt, die aus einem gefüllten und glasfaserverstärkten polymeren Material gebildet ist.

Die EP 0 337 443 A1 betrifft eine Polyamidharz-Zusammensetzung mit exzellenten Antivibrationseigenschaften. Die Polyamid-Zusammensetzung beinhaltet ein Polyamidharz, das aus Xylylendiamin und einer α,ω-linearkettigen aliphatischen Dicarbonsäure gebildet ist.

Die US 2004/0102559 A1 beschreibt eine Polyamidharz-Zusammensetzung, die ein Polyamidharz, einen anorganischen Füller sowie Ruß in bestimmten Gewichtsverhältnissen beinhaltet.

Aus dem Produktdatenblatt "IXEF-PAMXD6 Compound" der Solvey Advanced Polymers LLC, 2005, werden physikalische und mechanische Daten eines Polymer-Compounds, der mit dem Markennamen "XF2030" bezeichnet ist, vorgestellt.

Ausgehend hiervon war es Aufgabe der vorliegenden Erfindung, Polyamidformmassen bereitzustellen, mit denen Formkörper mit guten mechanischen Eigenschaften und gleichzeitig geringem Verzug herstellbar sind und die nicht die zuvor beschriebenen Nachteile des Standes der Technik aufweisen.

Diese Aufgabe wird in Bezug auf die Polyamidformmasse durch die Merkmale des Anspruchs 1, bezüglich der Formkörper durch die Merkmale des Anspruchs 15 und in Bezug auf die Verwendung durch die Merkmale des Anspruchs 20 gelöst. Die weiteren abhängigen Ansprüche zeigen vorteilhafte Weiterbildungen auf.

Die erfindungsgemäße Polyamidformmasse besteht aus 40 bis 79 Gew.-% mindestens eines transparenten, amorphen Polyamids, ausgewählt aus der Gruppe der Polyamide, deren Lichttransmission, gemessen nach ASTM D 1003-61 an einer Platte aus dem Polyamid mit einer Dicke von 2 mm, mindestens 70% beträgt, 15 bis 49 Gew.-% mindestens eines faserförmigen Verstärkungsstoffs und 6 bis 30 Gew.-% eines partikulären Füllstoffs. Weiterhin können in Ergänzung zu 100 Gew.-% weitere Additive enthalten sein. Bei den Additiven sind Polyamid-Oligomere ausgeschlossen. Erfindungsgemäß sind als mindestens ein faserförmiger Verstärkungsstoff Glasfasern mit einem Durchmesser von 5 bis 20 µm enthalten. Bevorzugte Zusammensetzungen bestehen aus 40 bis 69 Gew.-%, bevorzugt 40 bis 55 Gew.-%, des transparenten Polyamids, 25 bis 49 Gew.-%, bevorzugt 30 bis 49 Gew.-% des faserförmigen Verstärkungsstoffes, 6 bis 30 Gew.-% des partikulären Füllstoffs sowie gegebenenfalls in Ergänzung zu 100 Gew.-% aus mindestens einem weiteren Additiv. Unter Additiven im Rahmen der vorliegenden Erfindung sind jedoch nicht Polyamid-Oligomere zu verstehen.

Besonderes Merkmal der vorliegenden Erfindung ist es, dass durch die beanspruchte Kombination auf der einen Seite gute mechanische Eigenschaften von hieraus hergestellten Formkörpern erzielt werden können, und die erfindungsgemäßen Formkörper gleichzeitig einen im Vergleich zu bekannten Formkörpern wesentlich geringeren Verzug aufweisen.

Hinsichtlich der faserförmigen Verstärkungsstoffe bestehen grundsätzlich keinerlei Beschränkungen. Vorzugsweise sind diese ausgewählt aus der Gruppe bestehend aus Glasfasern, Kohlenstofffasern, Metallfasern, Aramidfasern, Whiskers und Mischungen hiervon. Unter Whiskers sind nadelförmige Einkristalle aus Metallen, Oxiden, Boriden, Carbiden, Nitriden, Polytitanat, Kohlenstoff usw. mit meist polygonalem Querschnitt zu verstehen, z. B. Kaliumnitanat-, Aluminiumoxyd-, Siliciumcarbid-Whiskers. Whiskers weisen im Allgemeinen einen Durchmesser von 0,1 bis 10 *µ*m und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS-Mechanismus) oder aus einem Dreiphasensystem (VLS-Mechanismus).

Die Glasfasern weisen bevorzugt einen Durchmesser von 5 bis 10 µm auf. Dabei werden vorzugsweise Glasfasern mit einem runden, ovalen, oder rechteckigen Querschnitt verwendet. Die Glasfasern bestehen dabei bevorzugt aus E-Glas. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z.B. auf Silanbasis, ausgerüstet sein können.

Als partikuläre Füllstoffe kommen alle dem Fachmann bekannten Füllstoffe in Frage. Hierzu zählen insbesondere partikuläre Füllstoffe ausgewählt aus der Gruppe bestehend aus Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen und Mischungen hiervon.

Transparente Polyamide im Sinne der vorliegenden Erfindung sind Polyamide die eine definierte Lichttransmission aufweisen.

Hierzu zählen erfindungsgemäß die Polyamide, deren Lichttransmission mindestens 70 % beträgt, wenn das Polyamid in Form einer Platte, z. B. einer Rundplatte, mit einer Dicke von 2 mm vorliegt. Rundplatten von 75 x 2 mm werden auf einer Arburg Spritzgussmaschine im polierten Werkzeug hergestellt, wobei die Zylindertemperatur zwischen 240 und 340 °C und die Werkzeugtemperatur zwischen 20 und 140 °C liegt. Die Messung der Lichttransmission wird nach 61 auf dem Messgerät Haze Gard plus der Firma Byk Gardner mit CIE Lichtart C bei 23 °C durchgeführt. Der Lichttransmissionswert wird dabei in % der eingestrahlten Lichtmenge angegeben.

Bevorzugt werden transparente Polyamide verwendet, welche eine Lichttransmission.von mindestens 86 %, besonders bevorzugt von mindestens 90 % aufweisen.

Hinsichtlich der Zusammensetzung der transparenten Polyamide bestehen keinerlei Beschränkungen, sodass alle dem Fachmann bekannten transparenten Polyamide oder deren Mischungen eingesetzt werden können. Hierzu zählen insbesondere die Polyamide, die aus mindestens einem Diamin und mindestens einer Dicarbonsäure und/oder mindestens einer Aminosäure oder eines Lactams hergestellt werden. Als Diamin sind hierbei aliphatische und/oder cycloaliphatische Diamine mit 6 bis 17 C-Atomen und/oder Diamine (C₆-C₁₇) mit teilaromatischen Strukturen bevorzugt. Als Dicarbonsäuren werden aliphatische und/oder aromatische Dicarbonsäuren mit 6 bis 12 C-Atomen bevorzugt verwendet. Die Aminosäuren sind bevorzugt ausgewählt aus der Gruppe der α, ω-Aminosäuren mit 6 bis 12 C-Atomen. Die Lactame sind bevorzugt ausgewählt aus der Gruppe der Lactame mit 6 bis 12 C-Atomen.

Die transparenten Polyamide weisen eine relative Viskosität von 1,36 - 1,80, bevorzugt 1,36 - 1,74, besonders bevorzugt 1,41 - 1,69 auf. Die relative Viskosität wird dabei nach DIN EN ISO 307, in 0,5 %-iger m-Kresollösung bei 20 °C bestimmt.

Die transparenten Polyamide weisen eine Glasübergangstemperatur (Tg) von mindestens 120 °C, bevorzugt mindestens 130 °C auf. Die Glasübergangstemperatur wird dabei mittels Differential Scanning Calorimetry (DSC) bei einer Aufheizrate von 20 °C/min nach der ISO-Norm 11357-1/-2 bestimmt. Angegeben wird die Temperatur am Wendepunkt.

Bevorzugt sind transparente, amorphe Polyamide. Hierzu zählen insbesondere die Polyamide, die in der dynamischen Differenz-Kalorimetrie (engl. Differential Scanning Calorimetry, DSC) nach ISO 1357-1/-2 bei einer Aufheizrate von 20 °C/min eine Schmelzwärme von maximal 5 kJ/g, bevorzugt maximal 3 kJ/g und besonders bevorzugt maximal 1 kJ/g aufweisen.

Die transparenten, amorphen Polyamide sind vorzugsweise aus mindestens einem Diamin und mindestens einer Dicarbonsäure und/oder mindestens einer Aminosäure oder eines Lactams hergestellt. Als Diamin sind hierbei aliphatische und/oder cycloaliphatische Diamine mit 6 bis 17 C-Atomen und/oder Diamine (C₆-C₁₇) mit teilaromatischen Strukturen bevorzugt. Als Dicarbonsäuren werden aliphatische und/oder aromatische Dicarbonsäuren mit 6 bis 12 C-Atomen bevorzugt verwendet. Die Aminosäuren sind bevorzugt ausgewählt aus der Gruppe der α, ω-Aminosäuren mit 6 bis 12 C-Atomen. Die Lactame sind bevorzugt ausgewählt aus der Gruppe der Lactame mit 6 bis 12 C-Atomen.

Die transparenten, amorphen Polyamide weisen eine relative Viskosität von 1,36 - 1,80, bevorzugt 1,36 - 1,74, besonders bevorzugt 1,41 - 1,69 auf. Die relative Viskosität wird dabei nach DIN EN ISO 307, in 0,5 %-iger m-Kresollösung bei 20 °C bestimmt.

Die transparenten, amorphen Polyamide weisen eine Glasübergangstemperatur (Tg) von mindestens 120 °C, bevorzugt mindestens 130 °C auf. Die Glasübergangstemperatur wird dabei mittels Differential Scanning Calorimetry (DSC) bei einer Aufheizrate von 20 °C/min nach der ISO-Norm 11357-1/-2 bestimmt. Angegeben wird die Temperatur am Wendepunkt.

Bevorzugte transparente, amorphe Polyamide sind aus der folgenden Gruppe ausgewählt: PA 6I, PA 6I/6T, PA MXDI/6I, PA MXDI/MXDT/6I/6T, PA MXDI/12I, PA MXDI, PA MACM12, PA MACMI/12, PA MACMI/MACMT/12, PA 6I/MACMI/12, PA 6I/6T/MACMI/MACMT, PA 6I/6T/MACMI/MACMT/12, PA MACM6/11, PA MACMI/MACM12 und Mischungen davon. Dabei kann das MACM zu bis zu 55 Mol-%, insbesondere zu bis zu 50 Mol-% durch PACM ersetzt sein.

In speziell bevorzugten Ausführungsformen werden als Basismaterial MACM-haltige, transparente, amorphe Polyamide oder deren Mischungen verwendet, welche jeweils eine relative Viskosität von 1,41 - 1,69, bevorzugt 1,49 - 1,69 besitzen. Ihre Glasübergangstemperatur beträgt mindestens 130 °C, bevorzugt mindestens 145 °C.

In einer weiteren besonderen Ausführungsform wird als Basismaterial ein transparentes, amorphes Polyamid aus der Gruppe MACM12, MACMI/12 und Mischungen davon verwendet, welche jeweils eine relative Viskosität von 1,41 - 1,69, bevorzugt 1,49 - 1,69 besitzen. Ihre Glasübergangstemperatur beträgt mindestens 130 °C, bevorzugt mindestens 145 °C.

Natürlich können die erfindungsgemäßen thermoplastischen Polyamidformmassen weiterhin übliche und dem Fachmann allgemein bekannte Zusatzstoffe enthalten, die aus der Gruppe bestehend aus Schlagzähmodifikatoren, bevorzugt sogenannte MBS- bzw. Kern-Mantel-Schlagzähmodifikatoren, z. B. auf Basis Methacrylat-Butadien-Styrol, Haftvermittlern, halogenhaltigen Flammschutzmitteln, halogenfreien Flammschutzmitteln, Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fließhilfsmitteln, Gleitmitteln, Entformungsmitteln, Weichmachern, Pigmenten, Farbstoffen, Markierungsstoffen und Mischungen hiervon ausgewählt sind.

Die erfindungsgemäßen Polyamidformmassen können für bestimmte Zwecke zusätzlich auch andere Polymere, wie Polyolefine, AN-Polymerisate, funktionalisierte Copolyolefine und Ionomere enthalten.

Weitere Ausführungsformen sehen vor, dass die Polyamidformmasse von 21 bis 60 Gew.-%, bevorzugt von 31 bis 60 Gew.-%, besonders bevorzugt von 45 bis 60 Gew.-%, insbesondere bevorzugt von 45 bis 55 Gew.-% der faserförmigen Verstärkungsstoffe und der partikulären Füllstoffe in Summe enthält.

Die Verstärkungsstoffe sind immer in mindestens der gleichen Menge (Gew.-%) vorhanden wie die Füllstoffe.

Die Erfindung umfasst weiterhin mit der vorstehend beschriebenen Formmasse hergestellte Formkörper. Diese Formkörper weisen vorzugsweise einen Verzug von ≤ 2,7 %, besonders bevorzugt ≤ 2,3 % auf. Dabei ist hervorzuheben, dass trotz dieses geringen Verzuges die mechanischen Eigenschaften der Formkörper unbeeinflusst bleiben. So besitzt der Formkörper vorzugsweise ein Zug-E-Modul von ≥ 8000 MPa, insbesondere ≥ 10000 MPa. Hinsichtlich der Reißfestigkeit sind Werte ≥ 100 MPa, und besonders ≥ 140 MPa bevorzugt. Bevorzugt weist die Polyamidformmasse eine Reißdehnung von ≥ 1,5 %, besonders bevorzugt ≥ 2,0 % auf.

Die Erfindung betrifft letztlich auch die Verwendung der zuvor beschriebenen Formmassen zur Herstellung von verzugsfreien Formkörpern. Hierbei sind die Formkörper vorzugsweise ausgewählt aus der Gruppe bestehend aus passgenauen Teilen, aufeinander beweglichen Teilen, Funktionselementen, Bedienungselementen, Nachführelementen, Justierelementen, Tragelementen, Rahmenelementen, Schaltern und Gehäusen im Bereich Elektro, Elektronik, Energie- und Antriebstechnik, Maschinenbau, Automobil, Möbel, Sport, Sanitär, Hygiene, Medizintechnik, Transportmittel, Telekommunikation, Unterhaltungselektronik, Haushaltsapparate oder elektrisches Werkzeug, hergestellt durch Spritzguss, Extrusion oder andere Verformungstechniken, z.B. Funktionsträger im Cockpitbereich eines Automobils, Rahmenbauteile einer Nähmaschine, Handygehäuse.

Die Herstellung der erfindungsgemäßen Polyamidformmassen kann auf üblichen Compoundiermaschinen, wie z. B. ein- oder zweiwelligen Extrudern oder Schneckenknetern erfolgen. In der Regel wird zunächst der polymere Anteil aufgeschmolzen und der Verstärkungs- und/oder Füllstoff an beliebigen Stellen des Extruders, z. B. mittels eines Sidefeeders, in die Schmelze eingetragen. Die Compoundierung erfolgt bevorzugt bei eingestellten Zylindertemperaturen von 260°C bis 320°C. Der polymere Anteil und der Verstärkungs- und/oder Füllstoff können aber auch alle in den Einzug dosiert werden.

Anhand der nachfolgenden Beispiele soll die vorliegende Erfindung näher erläutert werden, ohne diese durch die hier gezeigten speziellen Ausführungsformen einschränken zu wollen.

Die Formmassen wurden auf einem Zweiwellenextruder der Firma Werner & Pfleiderer Typ ZSK 25 hergestellt. Sowohl die Polyamid-Granulate als auch das Mineral wurden dabei über separate Waagen in den Einzug dosiert. Die Glasfaser wurde über einen Sidefeeder 6 Gehäuseeinheiten vor der Düse in die Polymerschmelze gefördert.

Die Temperatur des ersten Gehäuses wurde auf 100 °C eingestellt, diejenige der restlichen Gehäuse auf 280 °C. Es wurde eine Drehzahl von 200 U/min und ein Durchsatz von 10 kg/h verwendet und atmosphärisch entgast. Die. Stränge wurden im Wasserbad abgekühlt, geschnitten und das erhaltene Granulat bei 120 °C für 24 h getrocknet.

Die so hergestellten Formmassen wurden wie folgt zu Prüfkörpern verarbeitet und geprüft.

### Verarbeitung

Die Norm-Prüfkörper wurden auf einer Spritzgussmaschine der Firma Arburg, Modell Allrounder 320-210-750 Hydronica hergestellt. Bei Formmassen ohne PA 66 wurde eine Massetemperatur von 275 - 300 °C und eine Formtemperatur von 80 °C verwendet. Bei Formmassen mit PA 66 300 - 308 °C und 100 °C.

Die "Visitenkarten-Halter" wurden auf einer Spritzgussmaschine der Firma Ferromatik, Modell K85 D-S/2F, bei eingestellten Zylindertemperaturen von 270 - 290°C und einer Formtemperatur von 80 - 100 °C hergestellt.

### Prüfungen

### Verzug

Der Verzug wurde anhand eines spritzgegossenen "Visitenkarten-Halters" bestimmt. Nach 14 Tagen Lagerung bei Normalklima (23 °C, 50 % rel. Feuchte) wird die Breite gemessen und im Verhältnis zum Werkzeugmaß (Breite der Kavität: 90.2 mm) gesetzt. Je höher die Differenz, umso größer ist der Verzug.

### Zug-E-Modul:

ISO 527 mit einer Zuggeschwindigkeit von 1 mm/min ISO-Zugstab , Norm: ISO/CD 3167, Typ A1, 170 x 20/10 x 4 mm, Temperatur 23 °C

### Reißfestigkeit und Reißdehnung:

ISO 527 mit einer Zuggeschwindigkeit von 50 mm/min ISO-Zugstab , Norm: ISO/CD 3167, Typ A1, 170 x 20/10 x 4 mm, Temperatur 23 °C

### Schlagzähigkeit nach Charpy:

ISO 179/1eU
ISO-Prüfstab, Norm: ISO/CD 3167, Typ B1, 80 x 10 x 4 mm, Temperatur 23 °C

### Kerbschlagzähigkeit nach Charpy:

ISO 179/1eA
ISO-Prüfstab, Norm: ISO/CD 3167, Typ B1, 80 x 10 x 4 mm, Temperatur 23 °C

Sämtliche Prüfkörper, außer der "Visitenkarten-Halter", wurden im trockenen Zustand verwendet. Dazu wurden die Prüfkörper nach dem Spritzguss mindestens 48 h bei Raumtemperatur in trockener Umgebung gelagert.

### Beispiele und Vergleichsbeispiele

Im Folgenden werden folgende Abkürzungen verwendet:
- ABS: Acrylnitril-Butadien-Styrol-Copolymer
- IPS: Isophthalsäure (I)
- LC-12: Laurinlactam
- MACM: Bis-(4-amino-3-methyl-cyclohexyl)methan
- PC: Polycarbonat
- TPS: Terephthalsäure (T)
- RV: relative Viskosität

In Tabelle 1 sind die in den Beispielen eingesetzten Materialien aufgeführt.

**Tabelle 1**

| **Material** | **Handelsname** | **relative Viskosität bei 20 °C *m*-Kresol, 0,5%-ig** | **Charakterisierung** | **Lichttransmission (2 mm Platten) [%]** | **Hersteller** |
|---|---|---|---|---|---|
| MACM12 | - | 1,67 | *- / 50 / - / - / 50 | 93,5 | - |
| MACMI/12 | - | 1,55 | *- / 32.4/ 32.4 / - / 34.6 | 92 | - |
| 6I/6T/MACMI/MACMT | - | 1,45 | *42.9 / 7.6 / 44.5 / 5.0 / - | 91 | - |
| 6I/6T | - | 1,41 | *50.2 / - / 33.2 / 16.6 / - | 91 | - |
| PC/ABS | Bayblend T88-4N ** | - | - | - | Bayer AG, Deutschland |
| PA 66 | Ultramid S2701 | 2.70 in H2SO4, 1 %-ig | - | - | BASF AG, Deutschland |
| PA 6 | GRILON A 28 | 2.75 in H2SO4, 1 %-ig | - | - | EMS-CHEMIE AG, Schweiz |
| Glasfasern | Vetrotex 995 EC10-4.5 | - | E-Glas Durchmesser 10 mic Länge 4.5 mm | - | Saint-Gobain Vetrotex, Frankreich |
| Calciumcarbonat | MILLICARB-OG | - | Calciumcarbonat, gemahlen | - | Omya AG, Schweiz |
| Kaolin | Quality China Clay | - | Aluminiumsilikat | - | ECC International, Grossbritannien |

| | | | | | |
|---|---|---|---|---|---|
| * HMD/MACM/IPS/TPS/LC-12 in Mol-% ** 20 Gew.-% Glasfasern | | | | | |

Tabelle 2 zeigt die Zusammensetzung der erfindungsgemäßen Beispiele 1 bis 5 und die hierzu gehörigen Testergebnisse bezüglich des Verzugs und der mechanischen Eigenschaften.

Tabelle 3 zeigt die Zusammensetzung der erfindungsgemäßen Beispiele 6 bis 10 mit dazugehörigem Verzug und mechanischen Eigenschaften.

Tabelle 4 zeigt die Zusammensetzung der Vergleichsbeispiele 11 bis 16 mit dazugehörigen Testergebnissen.

Tabelle 5 zeigt die Zusammensetzung der Vergleichsbeispiele 17 bis 19 mit dazugehörigen Testergebnissen.

**Tabelle 2**

| **Beispiele** | | **Nummer** | | | | |
|---|---|---|---|---|---|---|
| **Materialien** | **Einheit** | **1** | **2** | **3** | **4⊗** | **5⊗** |
| MACM12 | Gew.-% | 40 | 55 | 40 | 40 | 50 |
| MACMI/12 | Gew.-% | - | - | - | - | - |
| 6I/6T/MACMI/MACMT | Gew.-% | - | - | - | - | - |
| 6I/6T | Gew.-% | - | - | - | - | - |
| Glasfasern | Gew.-% | 30 | 30 | 30 | 40 | 40 |
| Calciumcarbonat | Gew.-% | 30 | 15 | - | 20 | 10 |
| Kaolin | Gew.-% | - | - | 30 | - | - |
| **Tests** | | **1** | **2** | **3** | **4** | **5** |
| Verzug | % | 2,05 | 1,59 | 2,05 | 2,09 | 2,70 |
| Zug-E-Modul | MPa | 10230 | 8110 | 10630 | 11760 | 10260 |
| Reißfestigkeit | MPa | 144 | 141 | 110 | 149 | 147 |
| Reißdehnung | % | 2,5 | 3,2 | 1,6 | 2,3 | 2,6 |
| Schlagzähigkeit | kJ/m² | 34 | 56 | 16 | 37 | 45 |
| Kerbschlagzähigkeit | kJ/m² | 8 | 11 | 4 | 9 | 11 |

| | | | | | | |
|---|---|---|---|---|---|---|
| ⊗ Vergleichsbeispiele | | | | | | |

**Tabelle 3**

| **Beispiele** | | **Nummer** | | | | |
|---|---|---|---|---|---|---|
| **Materialien** | **Einheit** | **6** | **7** | **8** | **9** | **10** |
| MACM12 | Gew.-% | - | - | - | 40 | 45 |
| MACMI/12 | Gew.-% | - | - | 50 | - | - |
| 6I/6T/MACMI/MACMT | Gew.-% | 50 | - | - | - | - |
| 6I/6T | Gew.-% | - | 50 | - | - | - |
| Glasfasern | Gew.-% | 40 | 40 | 40 | 49 | 49 |
| Calciumcarbonat | Gew.-% | 10 | 10 | 10 | 11 | 6 |
| Kaolin | Gew.-% | - | - | - | - | - |
| **Tests** | | **6** | **7** | **8** | **9** | **10** |
| Verzug | % | 1,69 | 1,27 | 2,28 | 2,19 | 2,51 |
| Zug-E-Modul Reißfestigkeit | MPa | 14020 | 14630 | 11420 | 13770 | 13040 |
| | MPa | 208 | 221 | 164 | 165 | 150 |
| Reißdehnung | % | 2,2 | 2,4 | 2,4 | 2,2 | 2,1 |
| Schlagzähigkeit | kJ/m² | 37 | 36 | 37 | 40 | 38 |
| Kerbschlagzähigkeit | kJ/m² | 8 | 9 | 9 | 11 | 13 |

**Tabelle 4**

| **Vergleichsbeispiele** | | **Nummer** | | | | | |
|---|---|---|---|---|---|---|---|
| **Materialien** | **Einheit** | **11*** | **12** | **13** | **14** | **15** | **16** |
| PC/ABS | Gew.-% | 80 | - | - | - | - | - |
| MACM12 | Gew.-% | - | 70 | - | - | - | - |
| PA66 | Gew.-% | - | - | 60 | 40 | 51 | 43 |
| PA6 | Gew.-% | - | - | - | - | 9 | 6 |
| Glasfasern | Gew.-% | 20 | 30 | 30 | 30 | 30 | 30 |
| Calciumcarbonat | Gew.-% | - | - | 10 | - | 10 | - |
| Kaolin | Gew.-% | - | - | - | 30 | - | 30 |
| **Tests** | | **11** | **12** | **13** | **14** | **15** | **16** |
| Verzug | % | 2,75 | 3,33 | 6, 09 | 5,14 | 6,56 | 3, 99 |
| Zug-E-Modul | MPa | 5900 | 6450 | 11380 | 13650 | 10850 | 15010 |
| Reißfestigkeit | MPa | 77 | 122 | 187 | 131 | 187 | 137 |
| Reißdehnung | % | 2,0 | 3,9 | 3,2 | 1,5 | 3,7 | 1,4 |
| Schlagzähigkeit | kJ/m² | - | 61 | 82 | 24 | 95 | 27 |
| Kerbschlagzähigkeit | kJ/m² | - | 11 | 10 | 3 | 12 | 4 |

| | | | | | | | |
|---|---|---|---|---|---|---|---|
| * Bayblend T88-4N | | | | | | | |

**Tabelle 5**

| **Vergleichsbeispiele** | | **Nummer** | | |
|---|---|---|---|---|
| **Materialien** | **Einheit** | **17** | **18** | **19** |
| PC/ABS | Gew.-% | - | - | - |
| MACM12 | Gew.-% | 60 | - | - |
| PA66 | Gew.-% | - | 50 | 45 |
| PA 6 | Gew.-% | - | - | - |
| Glasfasern | Gew.-% | 40 | 40 | 49 |
| Calciumcarbonat | Gew.-% | - | 10 | 6 |
| Kaolin | Gew.-% | - | - | - |
| **Tests** | | **17** | **18** | **19** |
| Verzug | % | 3,27 | 5,32 | 5,11 |
| Zuq-E-Modul | MPa | 8730 | 14208 | 16520 |
| Reißfestigkeit | MPa | 146 | 217 | 241 |
| Reißdehnung | % | 3,4 | 3,0 | 2,7 |
| Schlagzähigkeit | kJ/m² | 64 | 92 | 105 |
| Kerbschlagzähigkeit | kJ/m² | 14 | 13 | 16 |

Die aus den Formmassen der erfindungsgemäßen Beispiele hergestellten "Visitenkarten-Halter" zeigen durchweg einen geringeren Verzug als diejenigen aus den Formmassen der Vergleichsbeispiele.

Die Prüfkörper aus der Formasse Nr. 11 mit einem amorphen PC/ABS-Blend als Basis (Bayblend T88-4N ein Handelsprodukt der Bayer AG) zeigt bei den Vergleichsbeispielen zwar den geringsten Verzug, dieser ist aber immer noch höher als derjenige der Prüfkörper aus den erfindungsgemäßen Formmassen.

Die Prüfkörper aus den auf teilkristallinen Polyamiden basierenden Vergleichsformmassen (Nr. 13 - 16 und 18, 19) weisen einen noch deutlich höheren Verzug auf.

Auch die Prüfkörper aus nur verstärkten Vergleichsformmassen mit einem amorphen Polyamid als Basis (Nr. 12 und 17) weisen einen höheren Verzug auf als diejenigen der erfindungsgemäßen Formmassen mit Verstärkungs- und Füllstoffen.

Die Vergleichsbeispiele zeigen weiterhin, dass hohe Zug-E-Moduli im Allgemeinen mit hohem Verzug einhergehen.

In diesem Zusammenhang liefert die Formmasse Nr. 11 zwar innerhalb der Vergleichsbeispiele die Prüfkörper mit dem geringsten Verzug, diese besitzen aber auch den niedrigsten Zug-E-Modul.

## Patentansprüche

1. Polyamid-Formmasse bestehend aus 40 bis 79 Gew.-% mindestens eines transparenten, amorphen Polyamids, ausgewählt aus der Gruppe der Polyamide, deren Lichttransmission, gemessen nach ASTM D 1003 - 61 an einer Platte aus dem Polyamid mit einer Dicke von 2 mm, mindestens 70 % beträgt, 15 bis 49 Gew.-% mindestens eines faserförmigen Verstärkungsstoffs und 6 bis 30 Gew.-% eines partikulären Füllstoffs sowie gegebenenfalls in Ergänzung auf 100 Gew.-% aus mindestens einem weiteren Additiv, wobei als Additiv Polyamid-Oligomere ausgeschlossen sind,
**dadurch gekennzeichnet, dass** als mindestens ein faserförmiger Verstärkungsstoff Glasfasern mit einem Durchmesser von 5 bis 20 µm enthalten sind.

2. Polyamidformmasse nach Anspruch 1,
**dadurch gekennzeichnet, dass** sie aus 40 bis 69 Gew.-%, bevorzugt 40 bis 55 Gew.-%, des transparenten Polyamids, 25 bis 49 Gew.-%, bevorzugt 30 bis 49 Gew.-% des faserförmigen Verstärkungsstoffes und 6 bis 30 Gew.-% des partikulären Füllstoffs sowie gegebenenfalls in Ergänzung auf 100 Gew.-% aus mindestens einem weiteren Additiv besteht.

3. Polyamid-Formmasse nach Anspruch 1 oder 2,
**dadurch gekennzeichnet, dass** mindestens ein weiterer faserförmiger Verstärkungsstoff, ausgewählt aus der Gruppe bestehend aus Kohlenstofffasern, Metallfasern, Aramidfasern, Whiskers und Mischungen hiervon enthalten ist.

4. Polyamid-Formmasse nach Anspruch 3,
**dadurch gekennzeichnet, dass** die Glasfasern einen Durchmesser von 5 bis 10 µm aufweisen.

5. Polyamid-Formmasse nach Anspruch 3 oder 4,
**dadurch gekennzeichnet, dass** die Glasfasern einen runden, ovalen oder rechteckigen Querschnitt aufweisen.

6. Polyamid-Formmasse nach einem der Ansprüche 3 bis 5,
**dadurch gekennzeichnet, dass** Glasfasern aus E-Glas enthalten sind.

7. Polyamid-Formmasse nach einem der vorhergehenden Ansprüche,
**dadurch gekennzeichnet, dass** der mindestens eine partikuläre Füllstoff ausgewählt ist aus der Gruppe bestehend aus Talk, Glimmer, Silikate, Quarz, Titandioxid, Wollastonit, Kaolin, Kieselsäuren, Magnesiumcarbonat, Magnesiumhydroxid, Kreide, gemahlenes oder gefälltes Calciumcarbonat, Kalk, Feldspat, Bariumsulfat, permanentmagentische oder magnetisierbare Metalle oder Legierungen, Glaskugeln, Hohlglaskugeln, hohlkugelige Silikatfüllstoffe und Mischungen hiervon.

8. Polyamid-Formmasse nach einem der vorhergehenden Ansprüche,
**dadurch gekennzeichnet, dass** das mindestens eine transparente Polyamid, ausgewählt ist aus der Gruppe der Polyamide, deren Lichttransmission, gemessen nach ASTM D 1003 - 61 an einer Platte aus dem Polyamid mit einer Dicke von 2 mm, mindestens mindestens 86 %, besonders bevorzugt mindestens 90 % beträgt.

9. Polyamid-Formmasse nach einem der vorhergehenden Ansprüche,
**dadurch gekennzeichnet, dass** das mindestens eine transparente, amorphe Polyamid ausgewählt ist aus der Gruppe der Polyamide, die in der Dynamischen Differenz-Kalorimetrie (engl. Differential Scanning Calorimetry, DSC) nach ISO 1357-1/-2 bei einer Aufheizrate von 20°C/min eine Schmelzwärme von maximal 5 J/g, bevorzugt maximal 3 J/g und besonders bevorzugt maximal 1 J/g aufweisen.

10. Polyamid-Formmasse nach einem der vorhergehenden Ansprüche,
**dadurch gekennzeichnet, dass** das transparente Polyamid ein amorphes Polyamid ist, das aus jeweils mindestens einem Polyamid-bildenden Diamin und/oder Dicarbonsäure und/oder Aminosäure oder Lactam erhalten worden ist.

11. Polyamid-Formmasse nach Anspruch 10,
**dadurch gekennzeichnet, dass** als Diamin aliphatische und/oder cycloaliphatische Diamine mit 6 bis 17 C-Atomen und/oder Diamine mit teilaromatischen Strukturen mit 6 bis 17 C-Atomen, als Dicarbonsäure aliphatische und/oder aromatische Dicarbonsäuren mit 6 bis 12 C-Atomen und als Aminosäure α,ω-Aminosäuren mit 6 bis 12 C-Atomen ausgewählt sind.

12. Polyamid-Formmasse nach einem der vorhergehenden Ansprüche,
**dadurch gekennzeichnet, dass** die Polyamide ausgewählt sind aus der Gruppe der Homo- und/oder Copolyamide auf Basis von PA 6I, PA 6I/6T, PA MXDI/6I, PA MXDI/MXDT/6I/6T, PA MXDI/12I, PA MXDI, PA MACM12, PA MACMI/12, PA MACMI/MACMT/12, PA6I/MACMI/12, PA 6I/6T/MACMI/MACMT, PA 6I/6T/MACMI/MACMT/12, PA MACM6/11, PA MACMI/MACM12, wobei MACM bis zu 55 Mol-%, insbesondere bis zu 50 Mol-% durch PACM ersetzt sein kann.

13. Polyamid-Formmasse nach einem der vorhergehenden Ansprüche,
**dadurch gekennzeichnet, dass** die Additive ausgewählt sind aus der Gruppe bestehend aus Schlagzähmodifikatoren, Haftvermittlern, halogenhaltigen Flammschutzmitteln, halogenfreien Flammschutzmitteln, Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, Pigmenten, Farbstoffen, Markierungsstoffen und Mischungen hiervon.

14. Polyamid-Formmasse nach einem der vorhergehenden Ansprüche,
**dadurch gekennzeichnet, dass** die Polyamid-Formmasse von 21 bis 60 Gew.-% der faserförmigen Verstärkungsstoffe und der partikulären Füllstoffe in Summe enthält.

15. Formkörper, hergestellt aus einer Polyamid-Formmasse nach einem der vorhergehenden Ansprüche.

16. Formkörper nach Anspruch 15,
**dadurch gekennzeichnet, dass** der Formkörper einen Verzug von kleiner oder gleich 2,7 %, insbesondere kleiner oder gleich 2,3 %, gemessen gemäß der auf Seite 11, Zeilen 18 bis 25 der Beschreibung angegebenen Methode aufweist.

17. Formkörper nach Anspruch 15 oder 16,
**dadurch gekennzeichnet, dass** der Formkörper einen Zug-E-Modul, gemessen gemäß der auf Seite 11, Zeilen 27 bis 30 der Beschreibung angegebenen Methode, von größer oder gleich 8000 MPa, insbesondere größer oder gleich 10000 MPa aufweist.

18. Formkörper nach einem der Ansprüche 15 bis 17,
**dadurch gekennzeichnet, dass** der Formkörper eine Reißfestigkeit, gemessen gemäß der auf Seite 11, Zeilen 32 bis 35 der Beschreibung angegebenen Methode von größer oder gleich 100 MPa, insbesondere 140 MPa aufweist.

19. Formkörper nach einem der Ansprüche 15 bis 18,
**dadurch gekennzeichnet, dass** die Polyamid-Formmasse eine Reißdehnung, gemessen gemäß der auf Seite 11, Zeilen 32 bis 35 der Beschreibung angegebenen Methode von größer oder gleich 1,5 %, insbesondere 2,0 % aufweist.

20. Verwendung der Polyamid-Formmasse nach einem der Ansprüche 1 bis 14 zur Herstellung von Formkörpern mit einem Verzug von kleiner oder gleich 2,7 %, gemessen gemäß der auf Seite 11, Zeilen 18 bis 25 der Beschreibung angegebenen Methode.

21. Verwendung nach vorhergehendem Anspruch,
**dadurch gekennzeichnet, dass** die Formkörper ausgewählt sind aus der Gruppe bestehend aus Fasern, Folien, Rohren, Hohlkörpern oder anderen Halbzeugen oder Fertigteilen aus Spritzguss, Extrusion, Pultrusion, Spritzblasen oder anderen Verformungstechniken.

## Claims

1. Polyamide moulding compound consisting of
40 to 79% by weight of at least one transparent amorphous polyamide, selected from the group of polyamides, the light transmission of which, measured according to ASTM D 1003 - 61 on a plate comprising the polyamide with a thickness of 2 mm, is at least 70%,
15 to 49% by weight of at least one fibrous reinforcing material and 6 to 30% by weight of a particulate filler and also, if necessary,
as complement to 100% by weight, at least one further additive, polyamide oligomers being excluded as additive,
**characterised in that**
glass fibres with a diameter of 5 to 20 µm are contained as at least one fibrous reinforcing material.

2. Polyamide moulding compound according to claim 1,
**characterised in that** it consists of
40 to 69% by weight, preferably 40 to 55% by weight of the transparent polyamide,
25 to 49% by weight, preferably 30 to 49% by weight, of the fibrous reinforcing material and
6 to 30% by weight of the particulate filler and also, if necessary,
as complement to 100% by weight, at least one further additive.

3. Polyamide moulding compound according to claim 1 or 2, **characterised in that** at least one further fibrous reinforcing material, selected from the group consisting of carbon fibres, metal fibres, aramide fibres, whiskers and mixtures thereof, is contained.

4. Polyamide moulding compound according to claim 3, **characterised in that** the glass fibres have a diameter of 5 to 10 µm.

5. Polyamide moulding compound according to claim 3 or 4, **characterised in that** the glass fibres have a round, oval or rectangular cross-section.

6. Polyamide moulding compound according to one of the claims 3 to 5, **characterised in that** glass fibres made of E-glass are contained.

7. Polyamide moulding compound according to one of the preceding claims,
**characterised in that** the at least one particulate filler is selected from the group consisting of talcum, mica, silicates, quartz, titanium dioxide, wollastonite, kaolin, silicic acids, magnesium carbonate, magnesium hydroxide, chalk, ground or precipitated calcium carbonate, lime, feldspar, barium sulfate, permanently magnetic or magnetisable metals or alloys, glass balls, hollow glass balls, hollow spherical silicate fillers and mixtures thereof.

8. Polyamide moulding compound according to one of the preceding claims,
**characterised in that** the at least one transparent polyamide is selected from the group of polyamides, the light transmission of which, measured according to ASTM D 1003 - 61 on a plate comprising the polyamide with a thickness of 2 mm, is at least 86%, preferably at least 90%.

9. Polyamide moulding compound according to one of the preceding claims,
**characterised in that** the at least one transparent amorphous polyamide is selected from the group of polyamides which, in the differential scanning calorimetry (DSC) according to ISO 1357-1/-2 at a heating rate of 20°C/min, have a melting heat of at most 5 J/g, preferably at most 3 J/g and particularly preferred at most 1 J/g.

10. Polyamide moulding compound according to one of the preceding claims,
**characterised in that** the transparent polyamide is an amorphous polyamide which was obtained from respectively at least one polyamide-forming diamine and/or dicarboxylic acid and/ or amino acid or lactam.

11. Polyamide moulding compound according to claim 10,
**characterised in that** as diamine aliphatic and/or cycloaliphatic diamines with 6 to 17 C-atoms and/or diamines with partially aromatic structures with 6 to 17 C-atoms, as dicarboxylic acid aliphatic and/or aromatic dicarboxylic acids with 6 to 12 C-atoms and as amino acid α,ω-amino acids with 6 to 12 C-atoms are selected.

12. Polyamide moulding compound according to one of the preceding claims,
**characterised in that** the polyamides are selected from the group of homo- and/or copolyamides based on PA 6I, PA 6I/6T, PA MXDI/6I, PA MXDI/MXDT/6I/6T, PA MXDI/12I, PA MXDI, PA MACM12, PA MACMI/12, PA MACMI/MACMT/12, PA 6I/MACMI/12, PA 6I/6T/MACMI/MACMT, PA 6I/6T/MACMI/MACMT/12, PA MACM6/11, PA MACMI/MACM12, MACM being able to be replaced by PACM up to 55% by mol, in particular up to 50% by mol.

13. Polyamide moulding compound according to one of the preceding claims,
**characterised in that** the additives are selected from the group comprising impact strength modifiers, bonding agents, halogen-containing flameproofing agents, halogen-free flameproofing agents, stabilisers, age-protecting agents, antioxidants, antiozonants, light protection agents, UV stabilisers, UV absorbers, UV blockers, inorganic heat stabilisers, organic heat stabilisers, conductivity additives, carbon black, optical lighteners, processing aids, nucleation agents, crystallization accelerators, crystallisation inhibitors, flow aids, lubricants, mould-release agents, softeners, pigments, colourants, marking materials and mixtures thereof.

14. Polyamide moulding compound according to one of the preceding claims,
**characterised in that** the polyamide moulding compound in total contains from 21 to 60% by weight of the fibrous reinforcing materials and the particulate fillers.

15. Moulded article, produced from a polyamide moulding compound according to one of the preceding claims.

16. Moulded article according to claim 15,
**characterised in that** the moulded article has a distortion, measured according to the method defined on page 11, lines 18 to 25 of the specification, of less than or equal to 2.7%, in particular less than or equal to 2.3%.

17. Moulded article according to claim 15 or 16,
**characterised in that** the moulded article has a modulus of elasticity in tension, measured according to the method defined on page 11, lines 27 to 30 of the specification, of greater than or equal to 8000 MPa, in particular greater than or equal to 10000 Pa.

18. Moulded article according to one of the claims 15 to 17,
**characterised in that** the moulded article has a tensile strength, measured according to the method defined on page 11, lines 32 to 35 of the specification, of greater than or equal to 100 MPa, in particular 140 MPa.

19. Moulded article according to one of the claims 15 to 18,
**characterised in that** the polyamide moulding compound has a breaking elongation, measured according to the method defined on page 11, lines 32 to 35 of the specification, of greater than or equal to 1.5%, in particular 2.0 %.

20. Use of the polyamide moulding compound according to one of the claims 1 to 14 for the production of moulded articles with a distortion of less than or equal to 2.7% measured according to the method defined on page 11, lines 18 to 25 of the specification.

21. Use according to the preceding claim,
**characterised in that** the moulded articles are selected from the group comprising fibres, films, pipes, hollow bodies or other semi-finished products or finished products from injection moulding, extrusion, pultrusion, injection blowing or other shaping technologies.

## Revendications

1. Mélange de polyamides à mouler, constitué de 40 à 79 % en poids d'au moins un polyamide amorphe transparent, choisi dans le groupe des polyamides dont la transmission lumineuse, mesurée selon la norme ASTM D 1003-61, est d'au moins 70 % sur une plaque en ce polyamide, ayant une épaisseur de 2 mm, de 15 à 49 % en poids d'au moins une matière de renfort fibreuse, et de 6 à 30 % en poids d'une matière de charge particulaire, ainsi qu'éventuellement, en complément à 100 % en poids, d'au moins un additif supplémentaire, auquel cas les oligomères de polyamides sont exclus en tant qu'additifs, **caractérisé en ce qu'**il contient en tant qu'au moins une matière de renfort fibreuse des fibres de verre ayant un diamètre de 5 à 20 µm.

2. Mélange de polyamides à mouler selon la revendication 1, **caractérisé en ce qu'**il est constitué de 40 à 69 % en poids, de préférence de 40 à 55 % en poids de ce polyamide transparent, de 25 à 49 % en poids, de préférence de 30 à 49 % en poids de la matière de renfort fibreuse, et de 6 à 30 % en poids de la matière de charge particulaire, ainsi qu'éventuellement, en complément à 100 % en poids, d'au moins un additif supplémentaire.

3. Mélange de polyamides à mouler selon la revendication 1 ou 2, **caractérisé en ce qu'**il contient au moins une matière de renfort fibreuse supplémentaire, choisie dans le groupe consistant en les fibres de carbone, les fibres métalliques, les fibres aramides, les trichites, et les mélanges de celles-ci.

4. Mélange de polyamides à mouler selon la revendication 1, **caractérisé en ce que** les fibres de verre présentent un diamètre de 5 à 10 µm.

5. Mélange de polyamides à mouler selon la revendication 3 ou 4, **caractérisé en ce que** les fibres de verre présentent une section transversale circulaire, ovale ou rectangulaire.

6. Mélange de polyamides à mouler selon l'une des revendications 3 à 5, **caractérisé en ce qu'**il contient des fibres de verre en verre E.

7. Mélange de polyamides à mouler selon l'une des revendications précédentes, **caractérisé en ce que** l'au moins une matière de charge particulaire est choisie dans le groupe constitué du talc, du mica, des silicates, du quartz, du dioxyde de titane, de la wollastonite, du kaolin, des silices, du carbonate de magnésium, de l'hydroxyde de magnésium, de la craie, du carbonate de calcium broyé ou précipité, de la chaux, du feldspath, du sulfate de baryum, des métaux ou alliages à aimantation permanente ou aimantables, des billes de verre, des billes de verre creuses, des charges silicatées en forme de billes creuses, et des mélanges de ceux-ci.

8. Mélange de polyamides à mouler selon l'une des revendications précédentes, **caractérisé en ce que** l'au moins un polyamide transparent est choisi dans le groupe des polyamides dont la transmission lumineuse, mesurée selon la norme ASTM D 1003-61, est d'au moins 86 %, d'une manière particulièrement préférée d'au moins 90 %, sur une plaque en ce polyamide, ayant une épaisseur de 2 mm.

9. Mélange de polyamides à mouler selon l'une des revendications précédentes, **caractérisé en ce que** l'au moins un polyamide amorphe transparent est choisi dans le groupe des polyamides qui présente en analyse calorimétrique différentielle (en anglais : Differential Scanning Calorimetry, DSC) selon la norme ISO 1357-1/-2, pour une vitesse de montée en température de 20°C/min, une chaleur de fusion au maximum de 5 J/g, de préférence au maximum de 3 J/g et d'une manière particulièrement préférée, au maximum de 1 J/g.

10. Mélange de polyamides à mouler selon l'une des revendications précédentes, **caractérisé en ce que** le polyamide transparent est un polyamide amorphe, obtenu respectivement à partir d'au moins une diamine génératrice de polyamide et/ou d'un acide dicarboxylique et/ou d'un acide aminé ou d'un lactame.

11. Mélange de polyamides à mouler selon la revendication 10, **caractérisé en ce que** sont choisis en tant que diamine, des diamines aliphatiques et/ou cycloaliphatiques ayant 6 à 17 atomes de carbone et/ou des diamines ayant une structure partiellement aromatique et ayant 6 à 17 atomes de carbone, en tant qu'acide dicarboxylique, des acides dicarboxyliques aliphatiques et/ou aromatiques ayant 6 à 12 atomes de carbone, et en tant qu'acide aminé, des acides α,ω-aminés ayant 6 à 12 atomes de carbone.

12. Mélange de polyamides à mouler selon l'une des revendications précédentes, **caractérisé en ce que** les polyamides sont choisis dans le groupe des homo- et/ou des copolyamides à base de PA 6I, PA 6I/6T, PA MXDI/6I, PA MXDI/MXDT/6I/6T, PA MXDI/12I, PA MXDI, PA MACM12, PA MACMI/12, PA MACMI/MACMT/12, PA6I/MACMI/12, PA 6I/6T/MACMI/MACMT, PA 6I/6T/MACMI/MACMT/12, PA MACM6/11, PA MACMI/MACM12, MACM pouvant être remplacés par du PACM, jusqu'à 55 % en moles, en particulier jusqu'à 50 % en moles.

13. Mélange de polyamides à mouler selon l'une des revendications précédentes, **caractérisé en ce que** les additifs sont choisis dans le groupe constitué des éléments modifiés pour résister aux chocs, des promoteurs d'adhérence, des retardateurs de flamme halogénés, des retardateurs non halogénés, des stabilisants, des agents de protection contre le vieillissement, des antioxydants, des anti-ozonants, des agents de protection contre la lumière, des stabilisants UV, des absorbants UV, des agents bloquant les UV, des stabilisants thermiques inorganiques, des stabilisants thermiques organiques, des additifs de conductivité, du noir de carbone, des azurants optiques, des auxiliaires de mise en oeuvre, des agents de nucléation, des accélérateurs de cristallisation, des retardateurs de cristallisation, des auxiliaires d'écoulement, des lubrifiants, des agents de démoulage, des plastifiants, des pigments, des substances colorantes, des agents de marquage et des mélanges de ceux-ci.

14. Mélange de polyamides à mouler selon l'une des revendications précédentes, **caractérisé en ce que** le mélange de polyamides à mouler contient 21 à 60 % en poids de la somme des matières de renfort fibreuses et des matières de remplissage particulaires.

15. Objet moulé fabriqué à partir d'un mélange de polyamides à mouler selon l'une des revendications précédentes.

16. Objet moulé selon la revendication 15, **caractérisé en ce que** l'objet moulé présente un gauchissement inférieur ou égal à 2,7 %, en particulier inférieur ou égal à 2,3 % en poids, mesuré par la méthode indiquée page 11, lignes 18 à 25, de la description.

17. Objet moulé selon la revendication 15 ou 16, **caractérisé en ce que** l'objet moulé présente un module d'élasticité en traction, mesuré par la méthode indiquée page 11, lignes 27 à 30, de la description, supérieur ou égal à 8000 MPa, en particulier supérieur ou égal à 10 000 MPa.

18. Objet moulé selon l'une des revendications 15 à 17, **caractérisé en ce que** l'objet moulé présente une résistance à la traction, mesurée par la méthode indiquée page 11, lignes 32 à 35, de la description, supérieure ou égale à 100 MPa, en particulier de 140 MPa.

19. Objet moulé selon l'une des revendications 15 à 18, **caractérisé en ce que** le mélange à mouler de polyamides présente un allongement à la rupture par traction supérieur ou égal à 1,5 %, en particulier de 2,0 %, mesuré par la méthode indiquée page 11, lignes 32 à 35 de la description,

20. Utilisation du mélange à mouler de polyamides selon l'une des revendications 1 à 14 pour fabriquer des objets moulés présentant un gauchissement inférieur ou égal à 2,7 %, mesuré par la méthode indiquée page 11, lignes 18 à 25 de la description.

21. Utilisation selon la revendication précédente, **caractérisée en ce que** les objets moulés sont choisis dans le groupe constitué des fibres, des feuilles, des tubes, des corps creux ou d'autres semi-produits ou pièces finies, obtenus par injection, extrusion, pultrusion, injection-soufflage, ou d'autres techniques de déformation.
